# EUROPÄISCHE PATENTSCHRIFT

(11) **EP 3 956 142 B1**
(45) Veröffentlichungstag und Bekanntmachung des Hinweises auf die Patenterteilung: **13.05.2026**
(21) Anmeldenummer: 20716494.8
(22) Anmeldetag: 09.04.2020
(51) Int. Cl.: B32B 37/18, B32B 3/26, B32B 27/08, B32B 38/06, B42D 25/45

(54) **SCHICHTENANORDNUNG MIT 3D-STRUKTUR UND 2D-PROJEKTION DIESER STRUKTUR UND VERFAHREN**
LAYERED ASSEMBLY WITH 3D STRUCTURE AND 2D PROJECTION OF THIS STRUCTURE AND METHOD
AGENCEMENT DE COUCHES DOTÉ D'UNE STRUCTURE TRIDIMENSIONNELLE ET PROJECTION BIDIMENSIONNELLE DE LADITE STRUCTURE ET PROCÉDÉ

(30) Priorität: 16.04.2019 EP 19169559
(43) Veröffentlichungstag der Anmeldung: 23.02.2022
(73) Patentinhaber: Covestro Deutschland AG, 51373 Leverkusen (DE)
(72) Erfinder: KUENZEL, Roland, 51381 Leverkusen (DE); GROSSER, Ulrich, 51515 Kürten (DE); GRIMM, Thomas, 50765 Köln (DE); KLINKENBERG, Christoph, 51063 Köln (DE); LEONHARDT, Konstantin, 41515 Grevenbroich (DE)
(74) Vertreter: Levpat
(86) Internationale Anmeldenummer: PCT/EP2020/060121
(87) Internationale Veröffentlichungsnummer: WO 2020/212240

(56) Entgegenhaltungen:
- DE-A1- 102004 044 458
- DE-A1- 102011 088 154
- US-A- 3 060 611

## Beschreibung

Die vorliegende Erfindung betrifft eine Schichtenanordnung, aufweisend: eine mit optischer Information versehene Folienschicht und eine dreidimensional strukturierte Schicht mit einer glatten Seite und einer der glatten Seite gegenüberliegenden strukturierten Seite. Die strukturierte Seite weist wenigstens eine zu der glatten Seite nicht coplanare Fläche auf, welche einem zuvor festgelegten Bezugsort zugewandt ist und die strukturierte Seite weist wenigstens eine zu der glatten Seite nicht coplanare Fläche auf, welche einem zuvor festgelegten Bezugsort abgewandt ist. Die dreidimensional strukturierte Schicht wird durch ein thermoplastisches Polymer gebildet, welches bei einer Schichtdicke von 4 mm eine visuelle Helligkeit Ty (D65, 10°) gemäß ASTM D1003 von ≥ 10% aufweist und die mit optischer Information versehene Folienschicht ist mit der strukturierten Seite der dreidimensional strukturierten Schicht verbunden.

WO 2009/083198 A1 beschreibt ein Verfahren zur dreidimensionalen Reproduktion eines Relief- und/oder Bildoriginals unter Verwendung einer glatten, mit einer bildlichen Darstellung des Relief- und/oder Bildoriginals versehenen, insbesondere bedruckten, thermoplastischen Folie als Reliefbasismaterial und einer positiven Reliefform, wobei die Folie während eines thermoplastischen Verformungsschrittes in passgenaue Übereinanderlage mit der positiven Reliefform gebracht und unter Wärmeeinfluss thermoplastisch verformt wird. Es soll in WO 2009/083198 A1 eine Lösung geschaffen werden, die ein vereinfachtes Verfahren zur Reproduktion eines Relief und/oder Bildoriginals bereitstellt. Dies wird laut WO 2009/083198 A1 erreicht durch die Durchführung folgender Schritte: a) Vorlage der thermoplastischen Folie, b) unter Positionsmarkierung ihrer Relativlage zueinander passgenaue Anordnung eines einen Durchblick auf die Folie ermöglichenden Reliefformbasismaterials auf oder mit geringem Abstand über der Bildseite der Folie, c) der bildlichen Darstellung entsprechendes Aufbringen der Reliefstruktur auf die der Bildseite der Folie abgewandte Seite des Reliefformbasismaterials durch Auftrag eines die positive Reliefform gestaltenden und ausbildenden Reliefformmaterials, d) Einbringen der positiven Reliefform in eine Wärmebehandlungs-Vorrichtung, e) der Positionsmarkierung aus dem Schritt b) entsprechendes passgenaues Auflegen der bildabgewandten Seite der Folie auf die strukturierte Oberseite der positiven Reliefform und f) Durchführung einer thermoplastischen Verformung und/oder Prägung der Folie.

DE 10 2011 088 154 A1 beschreibt ein schichtförmiges Produkt, vorzugsweise mit einer optischen Struktur wie beispielsweise einem Hologramm, umfassend wenigstens eine Schicht mit hoch lichtbrechenden Nanopartikeln und/oder wenigstens eine Schicht mit niedrig lichtbrechenden Nanopartikeln.

DE 10 2004 044 458 A1 beschreibt ein Sicherheitsdokument mit einem ersten transparenten Bereich, in dem ein erstes transparentes optisches Element angeordnet ist, und mit einem zweiten Bereich, in dem ein zweites opakes optisches Element angeordnet ist. Das zweite opake optische Element zeigt einen ersten optischen Effekt. Der erste Bereich und der zweite Bereich sind derart voneinander beabstandet auf einem Träger des Sicherheitsdokuments angeordnet, dass der erste und der zweite Bereich in Überdeckung miteinander gebracht werden können. Das transparente optische Element enthält eine beugende Reliefstruktur, die den Effekt einer konvexen Linse auf beugungsoptische Weise erzeugt.

US 3,060,611 A beschreibt ein Verfahren zum Reproduzieren von Textur auf einem konventionellen gedruckten Bild in Simulation eines Ölgemäldes, das die folgenden Schritte umfasst: Bilden einer Form mit darauf befindlichen Pinselstrichen, die den gedruckten Bildern folgen, dann Bilden eines transparenten Kunststofffilms, in den die Pigmente des gedruckten Bildes eingearbeitet sind, dann Ausrichten der Form mit dem Kunststofffilm, Anwenden von Wärme oberhalb der Folie und von Vakuumdruck von unterhalb der Form durch herkömmliche Mittel, wodurch die Textur der Form auf die Kunststofffolie übertragen wird, Entfernen der Folie von der Form, dann Auftragen eines weißen Pigments auf Wasserbasis auf die Rückseite der Folie und schließlich Anbringen der Folie auf einer dauerhaften Oberfläche.

Dreidimensionale Reliefmuster können ästhetisch angenehme Zierelemente darstellen. Nachteilig ist jedoch bislang, dass je mehr Material verarbeitet werden muss, desto mehr optische "Tiefe" der Gestalter erreichen möchte.

Die vorliegende Erfindung hat sich die Aufgabe gestellt, eine Schichtenanordnung bereitzustellen, welche bei verringerter Gesamtdicke dennoch einen räumlich tiefen Eindruck der in der Schichtenanordnung enthaltenen dreidimensionalen Strukturen ermöglicht. Mit solch einer Schichtenanordnung ließen sich ästhetisch ansprechende Zierelemente, beispielsweise für das Innere von Fahrzeugen, herstellen, ohne dass zu viel Material verarbeitet werden muss.

Erfindungsgemäß gelöst wird die Aufgabe durch eine Schichtenanordnung gemäß Anspruch 1. Ein Herstellungsverfahren ist Gegenstand des Anspruchs 14. Vorteilhafte Weiterbildungen sind in den Unteransprüchen angegeben. Sie können beliebig kombiniert werden, sofern sich aus dem Kontext nicht eindeutig das Gegenteil ergibt.

Mit den erfindungsgemäßen Schichtenanordnungen lassen sich bei verringerter Bauhöhe und somit unter Materialeinsparung durch das optische Zusammenspiel der 3D-Strukturen und der 2D-Projektion dieser Strukturen ansprechende, räumlich anmutende Effekte erzielen.

Die Erfindung wird anhand der nachfolgenden Zeichnungen näher erläutert, ohne jedoch darauf beschränkt zu sein. Es zeigen:
FIG. 1 eine erfindungsgemäße Schichtenanordnung und Projektion
FIG. 2 bis FIG. 5 weitere erfindungsgemäße Schichtenanordnungen

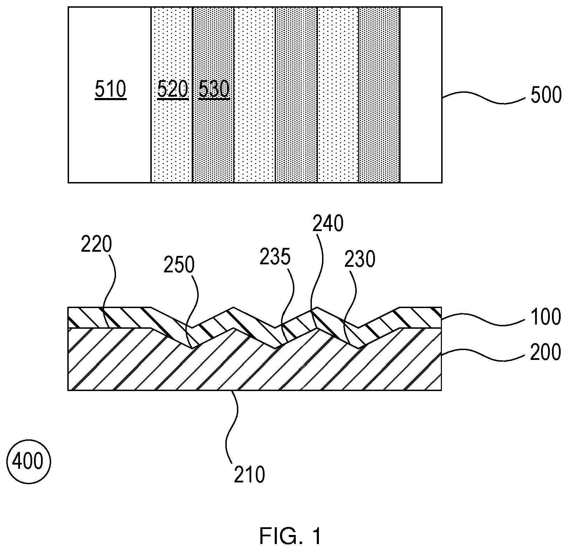

FIG. 1 zeigt schematisch eine erfindungsgemäße Schichtenanordnung, aufweisend eine mit optischer Information versehene Folienschicht 100 und eine dreidimensional strukturierte Schicht 200 mit einer glatten Seite 210 und einer der glatten Seite 210 gegenüberliegenden strukturierten Seite 220. "Optische Information" kann hierbei durch unterschiedliche Bedruckungen (dann ist die Folie 100 eine bedruckte Folie), Einfärbungen oder Oberflächenrauigkeiten von ausgewählten Bereichen der Folie 100 dargestellt werden. Es ist weiterhin möglich, dass die Folie 100 als Lichtwellenleiter konzipiert ist und die optische Information durch selektives Auskoppeln von seitlich in die Folie 100 eingekoppeltem Licht dargestellt wird.

Die Position der Information in oder an der Folie 100 ist nicht beschränkt. So kann die Information auf der der strukturierten Schicht 200 zugewandten Seite der Folie 100 dargestellt sein, auf der der strukturierten Schicht 200 abgewandten Seite der Folie 100 oder auch innerhalb der Folie 100 vorliegen.

Die Schichtenanordnung kann planar oder auch nicht-planar (gekrümmt) ausgeführt sein. Entsprechend kann die glatte Seite 210 planar oder gekrümmt vorliegen. Die glatte Seite 210 weist, mit Ausnahme technisch unvermeidlicher Schwankungen, vorzugweise keine Erhebungen oder Vertiefungen auf.

Die strukturierte Seite 220 weist wenigstens eine zu der glatten Seite 210 nicht coplanare Fläche 230 auf, welche einem zuvor festgelegten Bezugsort 400 zugewandt ist. Solch eine Fläche 230 wird durch Erhebungen oder Gipfel 240 und/oder Vertiefungen oder Täler 250 auf der strukturierten Seite 220 gebildet. Der Bezugsort 400 kann ein Bezugspunkt sein. Es handelt sich um eine gedankliche Position, welche als Auge eines Betrachters oder als Lichtquelle (um Schattenwürfe auf der strukturierten Seite 220 zu erzeugen oder simulieren) aufgefasst werden kann. Weiterhin weist die strukturierte Seite 220 wenigstens eine zu der glatten Seite 210 nicht coplanare Fläche 235 auf, welche dem zuvor festgelegten Bezugsort 400 abgewandt ist.

Die dreidimensional strukturierte Schicht 200 wird durch ein thermoplastisches Polymer gebildet, welches bei einer Schichtdicke von 4 mm eine visuelle Helligkeit Ty (D65/10°) gemäß ASTM D1003 von ≥ 10% aufweist. Somit kann die 3D-strukturierte Schicht 200 als transparent oder wenigstens teilweise transparent angesehen werden.

Beispiele für geeignete thermoplastische Polymere sind die Mitglieder ausgewählt aus der Gruppe umfassend Polycarbonat, Polyestercarbonat, Polystyrol, Polyamid, Styrol-Copolymere, aromatische Polyester, PET-Cyclohexandimethanol-Copolymer (PETG), Polyethylennaphthalat (PEN), Polybutylenterephthalat (PBT), Poly- oder Copolyacrylate und Poly- oder Copolymethacrylat, sowie Copolymere mit Styrol.

Dabei umfasst der Begriff Polycarbonat auch Copolycarbonate. Bei Styrol-Copolymere ist Acrylnitril-Styrol-Acrylat-Copolymer (ASA) bevorzugt, bei aromatischen Polyestern ist wie Polyethylenterephthalat (PET) bevorzugt, bei Poly- oder Copolymethacrylat sind Poly- oder Copolymethylmethacrylate, insbesondere Polymethylmethacrylat (PMMA), bevorzugt, und bei Copolymeren mit Styrol ist transparentes Polystyrolacrylnitril (PSAN) bevorzugt.

Das thermoplastische Polymer kann selbstverständlich Additive wie Farbstoffe, Stabilisatoren, Schlagzähmodifikatoren und dergleichen enthalten. Vorzugsweise beträgt die visuelle Helligkeit Ty ≥ 20% bis ≤ 99% und mehr bevorzugt ≥ 50% bis ≤ 92%.

Die mit optischer Information versehene Folienschicht 100 ist mit der strukturierten Seite 220 der dreidimensional strukturierten Schicht 200 verbunden. Dieses kann zum Beispiel in einem Folien-Hinterspritzprozess erfolgen. Es ist bevorzugt, dass die Folie 100 der Kontur der strukturierten Seite 220 folgt. Dieser Fall ist auch in FIG. 1 dargestellt.

In der erfindungsgemäßen Schichtenanordnung ist vorgesehen, dass die optische Information der mit optischer Information versehenen Folienschicht 100 wenigstens einen Teil einer zweidimensionalen Projektion 500 der dreidimensional strukturierten Schicht 200 repräsentiert. Vorzugsweise ist die Folienschicht 100 mit der vollständigen Projektion der 3D-strukturierten Schicht 200 versehen. Die Projektion 500 ist in FIG. 1 zur Verdeutlichung oberhalb der Schichtenanordnung abgebildet. In der Projektion 500, welche die Gesamtprojektion darstellt, sind Projektionen 510, 520 und 530 zu erkennen, deren Grenzen zueinander durch die Erhebungen 240 und Vertiefungen 250 der strukturierten Seite 220 definiert sind. Somit enthält die Projektion 500 wenigstens die Projektionen 520 und 530.

Die Projektion 520 der wenigstens einen Fläche 230, welche dem Bezugsort 400 zugewandt ist, wird auf der mit optischer Information versehenen Folienschicht 100 anders dargestellt als die Projektion 530 der wenigstens einen Fläche 235, welche dem Bezugsort 400 abgewandt ist. Durch die Zuwendung zum oder Abwendung vom Bezugsort 400 lassen sich beispielsweise Beleuchtungen oder Abschattungen der Flächen definieren. Dieses ist vergleichbar mit der Darstellung von Bergen (einer dreidimensionalen Struktur) in einer Landkarte (einer zweidimensionalen Struktur). Es wird ein Bezugsort für eine Lichtquelle gewählt und basierend hierauf werden der Lichtquelle abgewandte Bergflanken dunkler oder schattiert dargestellt. Auf diese Weise wird in der Landkarte ein dreidimensionaler Eindruck des Berges vermittelt.

Die Projektion 500 kann erhalten werden, indem ein dreidimensionales CAD-Modell der strukturierten Schicht 200 mittels Raytracing-Verfahren in ein zweidimensionales Bild überführt wird.

Es ist möglich, dass horizontale Abschnitte der strukturierten Seite 220 nicht in der Projektion 500 eingefärbt oder auf sonstige Weise durch optische Information repräsentiert werden. Dieses ist auch in FIG. 1 durch die Projektion 510 dargestellt. Durch den Verzicht auf deren Einfärbung verstärkt sich der optische Eindruck der übrigen Projektionen 520 und 530.

Gemäß einer Ausführungsform, welche ebenfalls in FIG. 1 gezeigt ist, ist die Projektion 500 eine orthogonale, nicht verschobene Projektion. Die Folie 100 mitsamt der Projektion ist dann deckungsgleich mit der strukturierten Seite 220.

Gemäß einer weiteren Ausführungsform, welche ebenfalls in FIG. 1 gezeigt ist, ist der Bezugsort 400 der glatten Seite 210 der dreidimensional strukturierten Schicht 200 zugewandt. Die erfindungsgemäße Schichtenanordnung kann als Blende oder Zierteil verwendet werden. Vorzugsweise ist dann die glatte Seite 210 die einem Betrachter zugewandte Seite, so dass der Bezugspunkt 400 eine mögliche Position eines Betrachters darstellt.

Gemäß einer weiteren Ausführungsform, welche ebenfalls in FIG. 1 gezeigt ist, ist der Bezugsort 400 außerhalb der vertikalen Grenzen der Schichtenanordnung angeordnet.

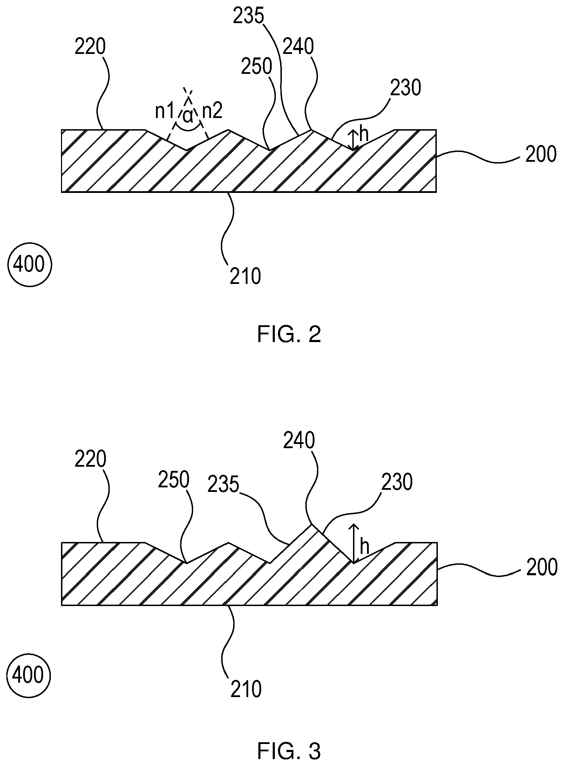

FIG. 2 zeigt die in FIG. 1 abgebildete Schichtenanordnung ohne die Projektion 500 und, zur besseren Übersicht, ohne die mit optischer Information versehene Folienschicht 100, dafür mit zusätzlichen geometrischen Deskriptoren h, n1, n2 und α. Gemäß einer weiteren Ausführungsform beträgt in der strukturierten Seite 220 der dreidimensional strukturierten Schicht 200 der maximale vertikale Abstand h zwischen einem Gipfel 240 und benachbarten einem Tal 250 ≤ 2 mm. Vorzugsweise beträgt der Abstand h ≥ 0.1 mm bis ≤ 1.5 mm und mehr bevorzugt ≥ 0.2 mm bis ≤ 0.9 mm. Die Höhe h kann durchaus so gewählt sein, dass der ihr zugeordnete Gipfel 240 über die horizontale Ebene der strukturierten Seite 220 hinausragt. Dieses ist beispielhaft in FIG. 3 dargestellt. In FIG. 3 ist zur besseren Übersicht die mit optischer Information versehene Folienschicht 100 ebenfalls nicht dargestellt.

Solche eingeschränkten Werte für den Abstand h haben den Vorteil, dass die dreidimensionale Struktur so flach wird, dass in der Herstellung der Schichtenanordnung die Folie nicht vorgeformt werden muss, sondern als zweidimensionale Folie in ein Spritzgießwerkzeug (für ein Folienhinterspritzen) eingelegt werden kann.

Ein weiterer Vorteil von derart eingeschränkten Werten für den Abstand h ist, dass die optische Qualität der glatten Seite 210 verbessert werden kann. Je geringer die Höhenunterschiede in der strukturierten Seite 220 sind, also je geringer h ist, desto geringer ist insgesamt betrachtet auch die Schwankung in der Masse des thermoplastischen Polymers senkrecht zur glatten Seite 210. Dann ergibt sich ein einheitlicheres Abkühlverhalten des Thermoplasten. Auf diese Weise werden optische Fehler durch inhomogenes Abkühlen des Thermoplasten vermieden. Durch die Kombination mit der Folie 100 erhält man dennoch einen ansprechenden räumlichen optischen Eindruck in der Schichtenanordnung.

Gemäß einer weiteren Ausführungsform, welche ebenfalls in FIG. 2 gezeigt ist, schneiden sich eine Flächennormale n1 einer dem Bezugsort 400 zugewandten Fläche 230 und eine Flächennormale n2 einer benachbarten, dem Bezugsort 400 abgewandten Fläche 235 in einem Winkel α von ≥ 5° bis ≤ 175°. Auf diese Weise lässt sich die Neigung der Flächen 230, 235 quantifizieren. Vorzugsweise beträgt der Winkel α ≥ 20° bis ≤ 70° und mehr bevorzugt ≥ 30° bis ≤ 60°.

Gemäß einer weiteren Ausführungsform wird die Folienschicht 100 mittels Laserstrukturierung, Tintenstrahldruck, Laserdruck, Digitaldruck oder Siebdruck mit optischer Information versehen. Bevorzugt ist ein Druckverfahren wie Siebdruck, so dass die Folienschicht 100 eine bedruckte Folienschicht ist, die bedruckte Folienschicht 100 mit wenigstens einem Teil einer zweidimensionalen Projektion 500 der dreidimensional strukturierten Schicht 200 bedruckt ist und die Projektion 520 der wenigstens einen Fläche 230, welche dem Bezugsort 400 zugewandt ist, auf der bedruckten Folienschicht 100 anders dargestellt wird als die Projektion 530 der wenigstens einen Fläche 235, welche dem Bezugsort 400 abgewandt ist.

Gemäß einer weiteren Ausführungsform, wobei auf FIG. 1 Bezug genommen werden kann, weist die Projektion 520 der wenigstens einen Fläche 230, welche dem Bezugsort 400 zugewandt ist, auf der mit optischer Information versehenen Folienschicht 100 einen niedrigeren Tonwert auf als die Projektion 530 der wenigstens einen Fläche 235, welche dem Bezugsort 400 abgewandt ist. Der Begriff Tonwert bezieht sich auf die unterschiedlichen Stufen zwischen Hell und Dunkel eines Farb- oder Schwarzweiß-Bildes, sei es in einem digitalen Datensatz, auf einem transparenten Träger (Film) oder auf einem Aufsichtsbild, fotografisch oder gedruckt. Er beschreibt bei einem Bildelement (Punkt) einen Farb- oder Grauwert innerhalb eines vorgegebenen Farb- bzw. Graustufenspektrums, angegeben in 0 bis 100 %. Dabei bedeutet 100 % maximale Dunkelheit bzw. Farbbedeckung (Vollton) des Abbildungsmediums. Entsprechend steht 0 % für komplette Transparenz des Films bzw. Blankopapier bei Rasterdrucken. Der Tonwert wird aus Messungen der optischen Dichte/des Reflexionsgrades bestimmt und nach der Murray-Davies-Formel aus diesen Messwerten berechnet.

Im additiven CMYK-Farbmodell, welche in Druckprozessen verwendet wird, kann der Grauwert als prozentualer Anteil der Komponente K ("key", Schwarz) ausgedrückt werden. Vorzugsweise weist die Projektion 520 der wenigstens einen Fläche 230, welche dem Bezugsort 400 zugewandt ist, auf der mit optischer Information versehenen Folienschicht 100 einen niedrigeren Grauwert im CMYK-Farbmodell auf als die Projektion 530 der wenigstens einen Fläche 235, welche dem Bezugsort 400 abgewandt ist. In der zuvor beschriebenen vereinfachten Analogie werden der Lichtquelle abgewandte "Bergflanken" dunkler dargestellt als diejenigen "Bergflanken", welche der Lichtquelle zugewandt sind.

Gemäß einer weiteren Ausführungsform, wobei ebenfalls auf FIG. 1 Bezug genommen werden kann, wird der Tonwert der Projektion 520 der wenigstens einen Fläche 230, welche dem Bezugsort 400 zugewandt ist, als Funktion der Neigung der Fläche 230 gegenüber der Horizontalen ausgewählt. In der zuvor beschriebenen vereinfachten Analogie werden der Lichtquelle zugwandte "Bergflanken" je nach ihrer Neigung unterschiedlich dargestellt.

Gemäß einer weiteren Ausführungsform, wobei ebenfalls auf FIG. 1 Bezug genommen werden kann, wird der Tonwert der Projektion 530 der wenigstens einen Fläche 235, welche dem Bezugsort 400 abgewandt ist, als Funktion der Neigung der Fläche 235 ausgewählt. In der zuvor beschriebenen vereinfachten Analogie werden der Lichtquelle abgewandte "Bergflanken" je nach ihrer Neigung unterschiedlich, insbesondere dunkler, dargestellt.

Die Funktion in den beiden zuletzt genannten Ausführungsformen kann zum Beispiel, unabhängig voneinander, eine lineare Funktion oder eine logarithmische Funktion sein. Eine logarithmische Funktion ist vorteilhaft, um den logarithmischen Verlauf der Sinnesempfindungen des Menschen widerzuspiegeln.

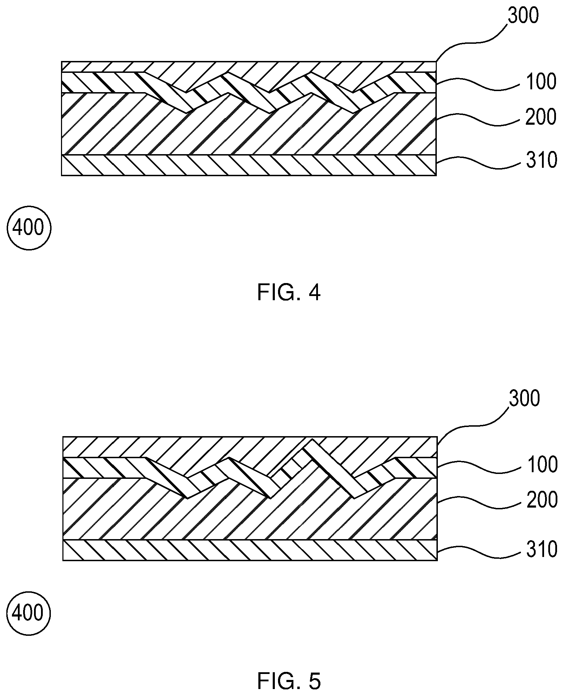

Gemäß einer weiteren Ausführungsform, welche in FIG. 4 und 5 abgebildet ist, liegt auf der der strukturierten Seite 220 der dreidimensional strukturierten Schicht 200 abgewandten Seite der mit optischer Information versehenen Folienschicht 100 weiterhin eine mit dieser Schicht verbundene erste Zusatzschicht 300 vor. Zusätzlich oder alternativ liegt auf der glatten Seite 210 der dreidimensional strukturierten Schicht 200 weiterhin eine mit dieser Schicht verbundene zweite Zusatzschicht 310 vor. Die erste Zusatzschicht 300 und zweite Zusatzschicht 310 können unabhängig voneinander durch eine Folie, einen Lack, durch Bedampfen oder durch Plasmabeschichtung realisiert werden. Solch eine Zusatzschicht 300, 310 kann die Schichtenanordnung vor Verschmutzung oder Verkratzen schützen.

Gemäß einer weiteren Ausführungsform ist das thermoplastische Polymer, aus dem die dreidimensional strukturierte Schicht 200 gebildet wird, ein Polycarbonat. Mit eingeschlossen in diesen Begriff sind Co-Polycarbonate und Polycarbonat-Blends. Das Polycarbonat kann eine Schmelzvolumenrate MVR von 8 bis 20 cm³/(10 min), bestimmt nach ISO 1133-1:2012-03 (300°C, 1,2 kg), aufweisen. Bevorzugt sind das Homopolycarbonat auf Basis von Bisphenol A, das Homopolycarbonat auf Basis von 1,1-Bis-(4-hydroxyphenyl)-3,3,5-trimethylcyclohexan, ein Copolycarbonat umfassend Isosorbid, 2,3-Dihydro-3,3-bis(4-hydroxyphenyl)-2-methyl-1H-isoindol-1-one, 2,3-Dihydro-3,3-bis(4-hydroxyphenyl)-2-phenyl-1H-isoindol-1-one, 1,3-Dihydro-3,3-bis(4-hydroxyphenyl)-1-methyl-2H-indol-2-one, 1,3-Dihydro-3,3-bis(4-hydroxyphenyl)-1-phenyl-2*H*-indol-2-one, 1,2-Dihydro-2,2-bis(4-hydroxyphenyl)-1-methyl-3H-indol-3-one und/oder 1,2-Dihydro-2,2-bis(4-hydroxyphenyl)-1-phenyl-3H-indol-3-one, ein Copolycarbonat auf Basis der Monomere Bisphenol A und 1,1-Bis-(4-hydroxyphenyl)-3,3,5-trimethylcyclohexan oder eine Mischung aus wenigstens zwei der vorgenannten Polymere. Das Polycarbonat kann selbstverständlich Additive wie Farbstoffe, Stabilisatoren, Schlagzähmodifikatoren und dergleichen enthalten.

Die Folienschicht 100 enthält vorzugsweise ein oder mehrere thermoplastische Polymere. Beispiele wurden zuvor bereits genannt. Gemäß einer weiteren Ausführungsform enthält die mit optischer Information versehene Folienschicht 100 ein Polycarbonat. Mit eingeschlossen in diesen Begriff sind Co-Polycarbonate und Polycarbonat-Blends. Das Polycarbonat kann eine Schmelzvolumenrate MVR von 8 bis 20 cm³/(10 min), bestimmt nach ISO 1133-1:2012-03 (300°C, 1,2 kg), aufweisen. Bevorzugt sind das Homopolycarbonat auf Basis von Bisphenol A, das Homopolycarbonat auf Basis von 1,1-Bis-(4-hydroxyphenyl)-3,3,5-trimethylcyclohexan, ein Copolycarbonat umfassend Isosorbid, 2,3-Dihydro-3,3-bis(4-hydroxyphenyl)-2-methyl-1*H*-isoindol-1-one, 2,3-Dihydro-3,3-bis(4-hydroxyphenyl)-2-phenyl-1*H*-isoindol-1-one, 1,3-Dihydro-3,3-bis(4-hydroxyphenyl)-1-methyl-2*H*-indol-2-one, 1,3-Dihydro-3,3-bis(4-hydroxyphenyl)-1-phenyl-2*H*-indol-2-one, 1,2-Dihydro-2,2-bis(4-hydroxyphenyl)-1-methyl-3*H*-indol-3-one und/oder 1,2-Dihydro-2,2-bis(4-hydroxyphenyl)-1-phenyl-3*H*-indol-3-one, ein Copolycarbonat auf Basis der Monomere Bisphenol A und 1,1-Bis-(4-hydroxyphenyl)-3,3,5-trimethylcyclohexan oder eine Mischung aus wenigstens zwei der vorgenannten Polymere. Das Polycarbonat kann selbstverständlich Additive wie Farbstoffe, Stabilisatoren, Schlagzähmodifikatoren und dergleichen enthalten.

Gemäß einer weiteren Ausführungsform werden die erste Zusatzschicht 300 und/oder die zweite Zusatzschicht 310 durch einen Zweikomponentenlack (2K-Lack), durch eine coextrudierte Folie oder durch eine kratzfest beschichtete Folie gebildet. Vorzugsweise handelt es sich bei der kratzfest beschichteten Folie um eine Polycarbonatfolie, welche mit einer Siliziumoxid-Nanopartikel enthaltenden Beschichtung versehen ist.

Gemäß einer weiteren Ausführungsform gilt: die mit optischer Information versehene Folienschicht 100 weist eine Dicke von ≥100 µm bis ≤ 1000 µm (vorzugsweise ≥ 175 µm bis ≤ 500 µm, mehr bevorzugt ≥ 250 µm bis ≤ 375 µm) auf und/oder die dreidimensional strukturierte Schicht 200 weist eine maximale Dicke von ≥ 1.5 mm bis ≤ 6 mm (vorzugsweise ≥ 2 mm bis ≤ 5 mm, mehr bevorzugt ≥ 3 mm bis ≤ 4 mm) auf.

Die erfindungsgemäße Schichtenanordnung kann als Zierteil oder Dekorblende eingesetzt werden. Bevorzugte Einsatzgebiete sind Exterieur- oder Interieurbauteile von Fahrzeugen.

Ein Verfahren zur Herstellung einer erfindungsgemäßen Schichtenanordnung umfasst die Schritte:
- Auswählen einer dreidimensionalen Struktur, wobei die Struktur wenigstens eine gegenüber der Horizontalen geneigte Fläche 230 aufweist,
   und
   wobei die Struktur wenigstens eine gegenüber der Horizontalen geneigte Fläche 235 aufweist,
      wobei die Fläche 230 und die Fläche 235 einen Winkel von ungleich 180° einschließen,-Erzeugen von optischer Information, welche wenigstens einen Teil einer zweidimensionalen Projektion 500 der ausgewählten dreidimensionalen Struktur repräsentiert, auf einer Folie 100,
   wobei eine Projektion 520 der wenigstens einen Fläche 230, auf der Folie 100 anders dargestellt wird als die Projektion 530 der wenigstens einen Fläche 235.
- Erzeugen einer dreidimensional strukturierten Schicht 200, entsprechend der ausgewählten dreidimensionalen Struktur, aus einem thermoplastischen Polymer, wobei das Polymer bei einer Schichtdicke von 4 mm eine visuelle Helligkeit Ty (D65/10°) gemäß ASTM D1003 von ≥ 10% aufweist,
   so dass die dreidimensional strukturierte Schicht 200 eine glatte Seite 210 und eine der glatten Seite 210 gegenüberliegende strukturierte Seite 220 aufweist;
- Verbinden der Folie 100 mit der strukturierten Seite 220 der dreidimensional strukturierten Schicht 200.

Selbstverständlich können die im Zusammenhang mit dem erfindungsgemäßen Gegenstand genannten Ausführungsformen auch auf das Verfahren sinngemäß übertragen werden. So kann die optische Information auf der Folie 100 vorzugsweise durch Bedrucken erzeugt werden und die Folie 100 ist vorzugsweise so mit der Schicht 200 verbunden, dass die Projektion der 3D-Struktur deckungsgleich mit der strukturierten Seite 220 vorliegt.

## Patentansprüche

1. Schichtenanordnung, aufweisend:
eine mit optischer Information versehenen Folienschicht (100) und
eine dreidimensional strukturierte Schicht (200) mit einer glatten Seite (210) und einer der glatten Seite (210) gegenüberliegenden strukturierten Seite (220),
wobei die strukturierte Seite (220) wenigstens eine zu der glatten Seite (210) nicht coplanare Fläche (230) aufweist
und
wobei die strukturierte Seite (220) wenigstens eine zu der glatten Seite (210) nicht coplanare Fläche (235) aufweist
und
wobei die zu der glatten Seite (210) nicht coplanare Fläche (230) und die zu der glatten Seite (210) nicht coplanare Fläche (235) einen Winkel von ungleich 180° einschließen,
wobei die dreidimensional strukturierte Schicht (200) durch ein thermoplastisches Polymer gebildet wird, welches bei einer Schichtdicke von 4 mm eine visuelle Helligkeit Ty (D65/10°) gemäß ASTM D1003 von ≥ 10% aufweist und
wobei die mit optischer Information versehene Folienschicht (100) mit der strukturierten Seite (220) der dreidimensional strukturierten Schicht (200) verbunden ist,
wobei
die optische Information der mit optischer Information versehenen Folienschicht (100) wenigstens einen Teil einer zweidimensionalen Projektion (500) der dreidimensional strukturierten Schicht (200) repräsentiert,
wobei in der strukturierten Seite (220) der dreidimensional strukturierten Schicht (200) der maximale vertikale Abstand h zwischen einem Gipfel (240) und benachbarten einem Tal (250) ≤ 2 mm beträgt, und
eine Projektion (520) der wenigstens einen Fläche (230) auf der mit optischer Information versehenen Folienschicht (100) anders dargestellt wird als eine Projektion (530) der wenigstens einen Fläche (235).

2. Schichtenanordnung gemäß Anspruch 1, wobei die Projektion (500) eine orthogonale, nicht verschobene Projektion ist.

3. Schichtenanordnung gemäß Anspruch 1 oder 2, wobei das thermoplastische Polymer ausgewählt ist aus einem Mitglied aus der Gruppe umfassend Polycarbonat einschließlich Copolycarbonat, Polyestercarbonat, Polystyrol, Polyamid, Styrol-Copolymere, aromatische Polyester, PET-Cyclohexandimethanol-Copolymer (PETG), Polyethylennaphthalat (PEN), Polybutylenterephthalat (PBT), Poly- oder Copolyacrylate, Poly- oder Copolymethacrylate, Copolymethylmethacrylate (PMMA), Copolymere mit Styrol, Polystyrolacrylnitril (PSAN).

4. Schichtenanordnung gemäß einem der Ansprüche 1 bis 3, wobei eine Flächennormale n1 der Fläche (230) und eine Flächennormale n2 der Fläche (235) sich in einem Winkel α von ≥ 5° bis ≤ 175° schneiden.

5. Schichtenanordnung gemäß einem der Ansprüche 1 bis 4, wobei die Folienschicht (100) mittels Laserstrukturierung, Tintenstrahldruck, Laserdruck, Digitaldruck oder Siebdruck mit optischer Information versehen wird.

6. Schichtenanordnung gemäß einer der Ansprüche 1 bis 5, wobei die Projektion (520) der wenigstens einen Fläche (230) auf der mit optischer Information versehenen Folienschicht (100) einen niedrigeren Tonwert aufweist als die Projektion (530) der wenigstens einen Fläche (235).

7. Schichtenanordnung gemäß Anspruch 6, wobei der Tonwert der Projektion (520) der wenigstens einen Fläche (230) als Funktion der Neigung der Fläche (230) gegenüber der Horizontalen ausgewählt wird.

8. Schichtenanordnung gemäß Anspruch 6 oder 7, wobei der Tonwert der Projektion (530) der wenigstens einen Fläche (235) als Funktion der Neigung der Fläche (235) gegenüber der Horizontalen ausgewählt wird.

9. Schichtenanordnung gemäß einem der Ansprüche 1 bis 8, wobei auf der der strukturierten Seite (220) der dreidimensional strukturierten Schicht (200) abgewandten Seite der mit optischer Information versehenen Folienschicht (100) weiterhin eine mit dieser Schicht verbundene erste Zusatzschicht (300) vorliegt und/oder auf der glatten Seite (210) der dreidimensional strukturierten Schicht (200) weiterhin eine mit dieser Schicht verbundene zweite Zusatzschicht (310) vorliegt.

10. Schichtenanordnung gemäß einem der Ansprüche 1 bis 9, wobei das thermoplastische Polymer, aus dem die dreidimensional strukturierte Schicht (200) gebildet wird, ein Polycarbonat ist.

11. Schichtenanordnung gemäß einem der Ansprüche 1 bis 10, wobei die mit optischer Information versehene Folienschicht (100) ein Polycarbonat enthält.

12. Schichtenanordnung gemäß einem der Ansprüche 10 bis 11, wobei die erste Zusatzschicht (300) und/oder die zweite Zusatzschicht (310) durch einen Zweikomponentenlack, durch eine coextrudierte Folie oder durch eine kratzfest beschichtete Folie gebildet werden.

13. Schichtenanordnung gemäß einem der Ansprüche 1 bis 12, wobei gilt:
die mit optischer Information versehene Folienschicht (100) weist eine Dicke von ≥ 100 µm bis ≤ 1000 µm auf und/oder
die dreidimensional strukturierte Schicht (200) weist eine maximale Dicke von ≥ 1.5 mm bis ≤ 6.0 mm auf.

14. Verfahren zur Herstellung einer Schichtenanordnung gemäß einem der Ansprüche 1 bis 13, umfassend die Schritte:
- Auswählen einer dreidimensionalen Struktur, wobei die Struktur wenigstens eine gegenüber der Horizontalen geneigte Fläche (230) aufweist
und
wobei die Struktur wenigstens eine gegenüber der Horizontalen geneigte Fläche (235) aufweist,
wobei die Fläche (230) und die Fläche (235) einen Winkel von ungleich 180° einschließen,
- Erzeugen von optischer Information, welche wenigstens einen Teil einer zweidimensionalen Projektion (500) der ausgewählten dreidimensionalen Struktur repräsentiert, auf einer Folie (100),
wobei eine Projektion (520) der wenigstens einen Fläche (230) auf der Folie (100) anders dargestellt wird als die Projektion (530) der wenigstens einen Fläche (235).
- Erzeugen einer dreidimensional strukturierten Schicht (200), entsprechend der ausgewählten dreidimensionalen Struktur, aus einem thermoplastischen Polymer, wobei das Polymer bei einer Schichtdicke von 4 mm eine visuelle Helligkeit Ty (D65/10°) gemäß ASTM D1003 von ≥ 10% aufweist,
so dass die dreidimensional strukturierte Schicht (200) eine glatte Seite (210) und eine der glatten Seite (210) gegenüberliegende strukturierte Seite (220) aufweist;
- Verbinden der Folie (100) mit der strukturierten Seite (220) der dreidimensional strukturierten Schicht (200).

## Claims

1. Layer arrangement, comprising:
a foil layer (100) provided with optical information and a three-dimensionally structured layer (200) with a smooth side (210) and with a structured side (220) opposite to the smooth side (210),
where the structured side (220) has at least one surface area (230) which is not coplanar with the smooth side (210)
and
where the structured side (220) has at least one surface area (235) which is not coplanar with the smooth side (210)
and
where the surface area (230) which is not coplanar with the smooth side (210) and the surface area (235) which is not coplanar with the smooth side (210) include an angle not equal to 180°,
where the three-dimensionally structured layer (200) is formed by a thermoplastic polymer which, at a layer thickness of 4 mm, has an optical clarity Ty (D65/10°) of ≥ 10% in accordance with ASTM D1003 and
where the foil layer (100) provided with optical information is bonded to the structured side (220) of the three-dimensionally structured layer (200),
where the optical information of the foil layer (100) provided with optical information represents at least a portion of a two-dimensional projection (500) of the three-dimensionally structured layer (200),
where the maximal vertical distance h between a peak (240) and an adjacent valley (250) in the structured side (220) of the three-dimensionally structured layer (200) is ≤ 2 mm, and
the manner in which a projection (520) of the at least one surface area (230) is represented on the foil layer (100) provided with optical information differs from the manner in which a projection (530) of the at least one surface area (235) is represented.

2. Layer arrangement according to Claim 1, where the projection (500) is an orthogonal projection with no offset.

3. Layer arrangement according to Claim 1 or 2, where the thermoplastic polymer is selected from a member of the group comprising polycarbonate inclusive of copolycarbonate, polyester carbonate, polystyrene, polyamide, styrene copolymers, aromatic polyesters, PET-cyclohexanedimethanol copolymer (PETG), polyethylene naphthalate (PEN), polybutylene terephthalate (PBT), poly- or copolyacrylates, poly- or copolymethacrylates, copolymethyl methacrylates (PMMA), copolymers with styrene, polystyrene-acrylonitrile (PSAN) .

4. Layer arrangement according to any of Claims 1 to 3, where a straight line n1 perpendicular to the surface area (230) and a straight line n2 perpendicular to the surface area (235) intersect at an angle α of ≥ 5° to ≤ 175°.

5. Layer arrangement according to any of Claims 1 to 4, where the foil layer (100) is provided with optical information by means of laser structuring, inkjet printing, laser printing, digital printing or screen printing.

6. Layer arrangement according to any of Claims 1 to 5, where the projection (520), on the foil layer (100) provided with optical information, of the at least one surface area (230) has a lower tonal value than the projection (530) of the at least one surface area (235).

7. Layer arrangement according to Claim 6, where the tonal value of the projection (520) of the at least one surface area (230) is selected as a function of the angular deviation of the surface area (230) from horizontal.

8. Layer arrangement according to Claim 6 or 7, where the tonal value of the projection (530) of the at least one surface area (235) is selected as a function of the angular deviation of the surface area (235) from horizontal.

9. Layer arrangement according to any of Claims 1 to 8, where there is moreover, on that side of the foil layer (100) provided with optical information that faces away from the structured side (220) of the three-dimensionally structured layer (200), a first additional layer (300) present, bonded to said foil layer, and/or there is moreover, on the smooth side (210) of the three-dimensionally structured layer (200), a second additional layer (310) present, bonded to said structured layer.

10. Layer arrangement according to any of Claims 1 to 9, where the thermoplastic polymer from which the three-dimensionally structured layer (200) is formed is a polycarbonate.

11. Layer arrangement according to any of Claims 1 to 10, where the foil layer (100) provided with optical information comprises a polycarbonate.

12. Layer arrangement according to either of Claims 10 to 11, where the first additional layer (300) and/or the second additional layer (310) is/are formed by a two-component lacquer, by a coextruded foil or by a foil having a scratch-resistant coating.

13. Layer arrangement according to any of Claims 1 to 12, where:
the thickness of the foil layer (100) provided with optical information is ≥ 100 µm to ≤ 1000 µm and/or
the maximal thickness of the three-dimensionally structured layer (200) is ≥ 1.5 mm to ≤ 6.0 mm.

14. Process for the production of a layer arrangement according to any of Claims 1 to 13, comprising the following steps:
- selection of a three-dimensional structure, where the structure has at least one surface area (230) which has angular deviation from horizontal
and
where the structure has at least one surface area (235) which has angular deviation from horizontal,
where the surface area (230) and the surface area (235) include an angle not equal to 180°,
- generation, on a foil (100), of optical information which represents at least a portion of a two-dimensional projection (500) of the selected three-dimensional structure,
where the manner in which a projection (520) of the at least one surface area (230) is represented on the foil (100) differs from the manner in which the projection (530) of the at least one surface area (235) is represented,
- production of a three-dimensionally structured layer (200), corresponding to the selected three-dimensional structure, from a thermoplastic polymer, where the polymer has, at a layer thickness of 4 mm, an optical clarity Ty (D65/10°) of ≥ 10% in accordance with ASTM D1003,
in a manner such that the three-dimensionally structured layer (200) has a smooth side (210) and a structured side (220) opposite to the smooth side (210);
- bonding of the foil (100) to the structured side (220) of the three-dimensionally structured layer (200).

## Revendications

1. Agencement de couches, présentant :
une couche de film (100) pourvue d'informations optiques et
une couche structurée tridimensionnellement (200) ayant un côté lisse (210) et un côté structuré (220) opposé au côté lisse (210),
le côté structuré (220) présentant au moins une surface (230) qui n'est pas coplanaire par rapport au côté lisse (210)
et
le côté structuré (220) présentant au moins une surface (235) qui n'est pas coplanaire par rapport au côté lisse (210)
et
la surface (230) qui n'est pas coplanaire par rapport au côté lisse (235) et la surface (210) qui n'est pas coplanaire par rapport au côté lisse (210) formant un angle différent de 180°,
la couche structurée tridimensionnellement (200) étant formée par un polymère thermoplastique qui, pour une épaisseur de couche de 4 mm, présente une luminosité visuelle Ty (D65/10°) selon ASTM D1003 de ≥ 10 % et
la couche de film (100) pourvue d'informations optiques étant reliée au côté structuré (220) de la couche structurée tridimensionnellement (200),
les informations optiques de la couche de film (100) pourvue d'informations optiques représentant au moins une partie d'une projection bidimensionnelle (500) de la couche structurée tridimensionnellement (200),
dans le côté structuré (220) de la couche structurée tridimensionnellement (200), la distance verticale maximale h entre un comment (240) et un creux adjacent (250) étant ≤ 2 mm, et
une projection (520) de l'au moins une surface (230) sur la couche de film (100) pourvue d'informations optiques étant représentée différemment d'une projection (530) de l'au moins une surface (235).

2. Agencement de couches selon la revendication 1, dans lequel la saillie (500) est une saillie orthogonale non décalée.

3. Agencement de couches selon la revendication 1 ou 2, dans lequel le polymère thermoplastique est choisi parmi un élément du groupe comprenant le polycarbonate, y compris le copolycarbonate, le polyester carbonate, le polystyrène, le polyamide, les copolymères de styrène, les polyesters aromatiques, le copolymère PET-cyclohexanediméthanol (PETG), le polyéthylène naphtalate (PEN), le polybutylène téréphtalate (PBT), les polyacrylates ou copolyacrylates, les poly- ou copolyméthacrylates, les copolyméthacrylates de méthyle (PMMA), les copolymères avec le styrène, le polystyrène acrylonitrile (PSAN).

4. Agencement de couches selon l'une quelconque des revendications 1 à 3, dans lequel une normale de surface n1 de la surface (230) et une normale de surface n2 de la surface (235) se coupent sous un angle α de ≥ 5° à ≤ 175°.

5. Agencement de couches selon l'une quelconque des revendications 1 à 4, **caractérisé en ce que** la couche de film (100) est pourvue d'informations optiques par structuration laser, impression à jet d'encre, impression laser, impression numérique ou sérigraphie.

6. Agencement de couches selon l'une quelconque des revendications 1 à 5, dans lequel la projection (520) de l'au moins une zone (230) sur la couche de film (100) munie d'informations optiques présente une valeur tonale inférieure à la projection (530) de l'au moins une surface (235) .

7. Agencement de couches selon la revendication 6, dans lequel la valeur tonale de la projection (520) de l'au moins une surface (230) est choisie en fonction de l'inclinaison de la surface (230) par rapport à l'horizontale.

8. Agencement de couches selon la revendication 6 ou 7, **caractérisé en ce que** la valeur tonale de la projection (530) de l'au moins une surface (235) est choisie en fonction de l'inclinaison de la surface (235) par rapport à l'horizontale.

9. Agencement de couches selon l'une quelconque des revendications 1 à 8, **caractérisé en ce que**, du côté de la couche de film (100) pourvue d'informations optiques opposé au côté structuré (220) de la couche structurée tridimensionnellement (200), est en outre prévue une première couche supplémentaire (300) reliée à cette couche, et/ou, sur le côté lisse (210) de la couche structurée tridimensionnellement (200), est en outre prévue une deuxième couche supplémentaire (310) reliée à cette couche.

10. Agencement de couches selon l'une quelconque des revendications 1 à 9, **caractérisé en ce que** le polymère thermoplastique à partir duquel est formée la couche structurée tridimensionnellement (200) est un polycarbonate.

11. Agencement de couches selon l'une quelconque des revendications 1 à 10, **caractérisé en ce que** la couche de film (100) pourvue d'informations optiques contient un polycarbonate.

12. Agencement de couches selon l'une quelconque des revendications 10 à 11, **caractérisé en ce que** la première couche supplémentaire (300) et/ou la deuxième couche supplémentaire (310) sont formées par un vernis à deux composants, par un film coextrudé ou par un film revêtu résistant aux rayures.

13. Agencement de couches selon l'une quelconque des revendications 1 à 12, dans lequel :
la couche de film (100) pourvue d'informations optiques présente une épaisseur de ≥ 100 µm à ≤ 1000 µm et/ou
la couche structurée tridimensionnellement (200) présente une épaisseur maximale de ≥ 1,5 mm à ≤ 6,0 mm.

14. Procédé pour la fabrication d'un agencement de couches selon l'une quelconque des revendications 1 à 13, comprenant les étapes suivantes :
- la sélection d'une structure tridimensionnelle, la structure présentant au moins une surface (230) inclinée par rapport à l'horizontale
et
la structure présentant au moins une surface (235) inclinée par rapport à l'horizontale,
la surface (230) et la surface (235) formant un angle différent de 180°,
- la production d'informations optiques, qui représentent au moins une partie d'une projection bidimensionnelle (500) de la structure tridimensionnelle sélectionnée, sur un film (100),
une projection (520) de l'au moins une surface (230) sur le film (100) étant représentée différemment de la projection (530) de l'au moins une surface (235).
- la production d'une couche structurée tridimensionnellement (200), correspondant à la structure tridimensionnelle choisie, à partir d'un polymère thermoplastique, le polymère présentant, pour une épaisseur de couche de 4 mm, une luminosité visuelle Ty (D65/10 ) selon ASTM D1003 ≥ 10 %,
de telle sorte que la couche structurée tridimensionnellement (200) présente un côté lisse (210) et un côté structuré (220) opposé au côté lisse (210) ;
- la liaison du film (100) au côté structuré (220) de la couche structurée tridimensionnellement (200).
